# EUROPÄISCHE PATENTSCHRIFT

(11) **EP 1 283 417 B1**
(45) Veröffentlichungstag und Bekanntmachung des Hinweises auf die Patenterteilung: **25.07.2018**
(21) Anmeldenummer: 01123419.2
(22) Anmeldetag: 28.09.2001
(51) Int. Cl.: G01N 23/04, G01V 5/00

(54) **Verfahren und Anlage zur Inspektion eines Objektes, insbesondere eines Gepäckstückes**
Method and apparatus for inspecting an object, especially luggage
Méthode et appareil pour l'inspection d'un object, spécialement d'un bagage

(30) Priorität: 11.08.2001 DE 10139672
(43) Veröffentlichungstag der Anmeldung: 12.02.2003
(73) Patentinhaber: Smiths Heimann GmbH, 65205 Wiesbaden (DE)
(72) Erfinder: Aust, Stefan, 65527 Niedernhausen (DE); Meder, Claus, 64380 Rossdorf (DE); Koch, Cornelius, 65239 Hochheim (DE)
(74) Vertreter: Greif, Thomas

(56) Entgegenhaltungen:
- DE-A- 19 749 783

## Beschreibung

Die Erfindung betrifft ein Verfahren zur Inspektion eines Objektes, insbesondere eines Gepäckstückes, bei dem von einer ortsfesten Strahlenquelle Strahlen abgegeben werden, das Objekt geradlinig durch die Strahlen transportiert wird und dabei die Intensitäten der nicht absorbierten Strahlen von einer Detektoranordnung detektiert und in ein Bild des Objekts verarbeitet werden, sowie eine Anlage zur Durchführung eines derartigen Verfahrens.

Zur Inspektion von Objekten, beispielsweise zur Sicherheitsüberprüfung von Gepäckstücken auf Flughäfen, werden bekannterweise Verfahren und Anlagen verwendet, bei denen das Objekt geradlinig durch von einer ortsfesten Strahlenquelle abgegebene Strahlen transportiert wird. Die nicht von dem Objekt absorbierten Strahlen werden von einer Detektoranordnung detektiert und in ein Bild des Objekts verarbeitet, das einer Bedienungsperson an einem Bildschirm angezeigt wird. Üblicherweise erfolgt die Inspektion mit Röntgenstrahlen.

Da bei der Inspektion die nicht absorbierten Strahlen detektiert werden, wird ein Bereich, in dem die Strahlen vollständig oder nahezu vollständig absorbiert werden, in dem Bild als dunkle Fläche dargestellt. Läßt sich nicht ausschließen, daß hinter einem die Strahlen weitgehend absorbierenden Gegenstand sich ein sicherheitsrelevanter weiterer Gegenstand in dem Objekt befindet, so wird bei der Inspektion ein sogenannter Dunkelalarm ausgelöst. Das Objekt muß dann einer weiteren zeitaufwendigen Sicherheitsinspektion unterzogen werden, beispielsweise werden Gepäckstücke geöffnet und manuell überprüft.

Aus der US 6,988,423 ist ein Inspektionssystem mit drei Strahlenquelle bekannt, die in verschiedenen Positionen relativ zur Transportebene angeordnet sind und Strahlen in drei parallelen Ebenen abgeben. Die von den drei Detektoranordnungen detektierten Strahlen errechnet die Auswerteeinheit wahrscheinliche Außenkonturen von dreidimensionalen Gegenständen, u.a. mit dem Ziel, das Auftreten von Fehlalarmen zu vermeiden.

Der Erfindung liegt die Aufgabe zugrunde, ein Verfahren und eine Anlage zur Inspektion eines Objektes bereitzustellen, das (die) mit geringem konstruktiven Aufwand eine verbesserte Prüfung durch eine Verringerung der Dunkelalarme ermöglicht. Diese Aufgabe wird hinsichtlich des Verfahrens mit den Merkmalen des Patentanspruchs 1, hinsichtlich der Anlage mit den Merkmalen des Patentanspruchs 11 gelöst.

Nach der Erfindung ist nur eine einzige ortsfeste Strahlenquelle erforderlich. Falls das beim ersten Durchlauf erzeugte Bild zu überprüfende Dunkelbereiche enthält, wird das zu prüfende Objekt in eine geänderte Transportposition gedreht und mit derselben Strahlenquelle ein weiteres Bild erzeugt. Dieser Vorgang kann von einer Bedienungsperson oder von einer Automatik gesteuert so oft wiederholt werden, bis genügend Informationen über den Dunkelbereich des ersten Bildes vorliegen.

In der einfachsten Ausführungsform entscheidet eine Bedienungsperson in Abhängigkeit von den ihr vorliegenden Bildern, ob und in welcher Position das Objekt erneut durch die Strahlen transportiert und geprüft wird. Für diese Entscheidung bereitet die Auswerteeinheit die einzelnen Bilder eines Objekts entsprechend auf, bevorzugt werden sie auf einem Bildschirm nebeneinander oder zeitlich nacheinander, sowie alle in gleicher Richtung dargestellt.

Damit eine Bedienungsperson möglichst weitgehend bei der manuellen Steuerung der Inspektion unterstützt wird, werden die aktuellen Zustandswerte des Inspektionsvorgangs, insbesondere die Winkelposition des Objekts und die Anzahl der durchgeführten Durchläufe durch die Strahlen, angezeigt. Die Anzeige erfolgt bevorzugt auf dem Bildschirm der Auswerteeinheit, ebenso ist eine getrennte Anzeige möglich.

Das Verfahren läßt sich in einer weiteren Ausbaustufe dahingehend automatisieren, daß bei der Feststellung eines Dunkelbereichs eine automatisierte Inspektionsroutine ausgelöst wird. Dazu werden von einem Rechner in Abhängigkeit von Parametern des Dunkelbereichs die Anzahl der Durchläufe und/oder der Winkel vor einem Durchlauf automatisch gesteuert. Der jeweilige Drehwinkel und die zeitliche Abfolge der Darstellung der einzelnen Bilder eines Objektes lassen sich dabei so wählen, daß auf dem Bildschirm der Eindruck eines sich drehenden Objektes erzeugt wird. Diese Art der Darstellung erleichtert der das Bild prüfenden Bedienungsperson zu entscheiden, ob das Objekt einer weiteren Prüfungsstufe zugeführt oder zusätzlich manuell überprüft wird.

Prinzipiell ist eine Drehung um alle drei Raumachsen möglich, um die Position des Objekts vor einem weiteren Durchlauf zu verändern. Der Verlauf der Drehachse und der Betrag des Winkels werden dabei bevorzugt so gewählt, daß die größte Wahrscheinlichkeit besteht, beim nächsten Durchlauf keine Dunkelfläche zu erzeugen.

In der einfachsten Ausführungsform wird das Objekt nur um eine Drehachse gedreht. Bei der Gepäckprüfung wird dabei eine Drehung um eine Achse senkrecht zur Transportebene bevorzugt, da diese mit am wenigsten Aufwand zu realisieren ist.

Bevorzugt wird das Objekt mit jeweils wechselnder Transportrichtung durch die Strahlen transportiert, wobei bei jedem Durchlauf durch die Strahlen ein Bild erzeugt wird. Alternativ ist es auch möglich, Bilder nur beim Transport in eine Richtung zu erzeugen. Dies vereinfacht bei einer zeilenweisen Detektion die Auswertung der Bilder, da sie alle in gleicher Richtung in Bezug auf die Strahlen erzeugt werden und so direkt angezeigt werden können. Dazu wird entweder das Objekt beim geradlinigen Rücktransport an der Strahlenquelle vorbei nicht untersucht, oder das Objekt wird auf einer außen um die Strahlenquelle herumführenden Transportschleife für den nächsten Durchlauf zurück transportiert.

Nachfolgend wird die Erfindung anhand eines Ausführungsbeispiels näher erläutert.

Es zeigen
- Figur 1: die Seitenansicht einer Inspektionsanlage nach der Erfindung,
- Figur 2: eine Draufsicht auf die Anlage nach Figur 1,
- Figur 3 bis 8: in schematischer Darstellung den Ablauf eines Inspektionsvorgangs und

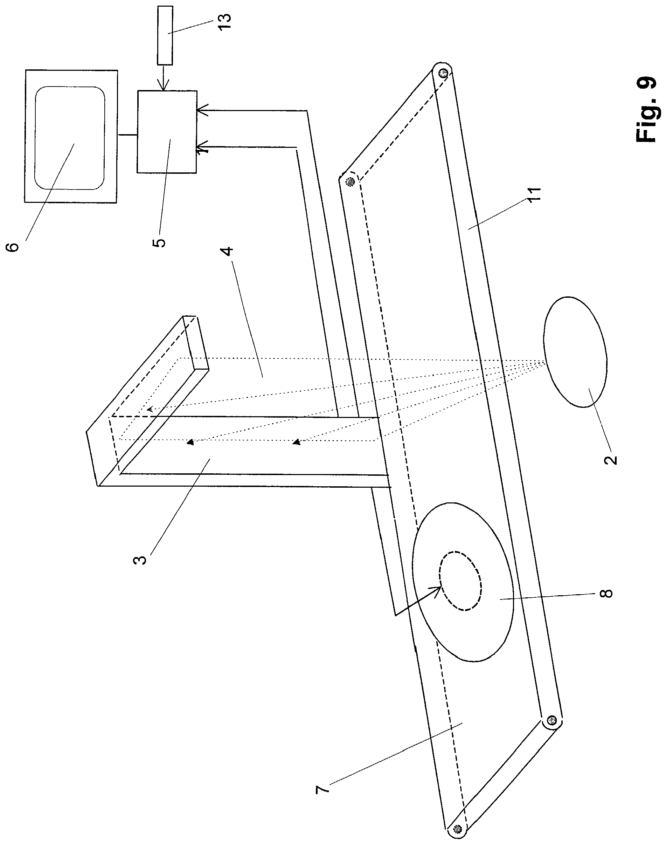

- Figur 9: schematisch die Anlage mit der zugehörigen Auswerteeinheit.

Die in den Figuren dargestellte Inspektionsanlage dient zur Sicherheitsüberprüfung von Gepäckstücken 1, beispielsweise von Koffern, wie sie auf Flughäfen durchgeführt wird. Die Anlage enthält als wesentliche Bestandteile eine ortsfeste Strahlenquelle 2, vorzugsweise eine Röntgenquelle, und eine auf die Strahlenquelle 2 ausgerichtete Detektoranordnung 3. Bevorzugt gibt die Strahlenquelle 2 Strahlen in einer fächerförmigen Strahlenebene 4 ab, und die Detektoranordnung 3 enthält Detektoren in einer zeilenförmigen Anordnung. Im vorliegenden Ausführungsbeispiel ist die Strahlenquelle 2 seitlich neben und etwas unterhalb der zu prüfenden Objekte 1 (Gepäckstücke) angeordnet. Die auf die Strahlenquelle 2 ausgerichtete Detektoranordnung 3 ist L-förmig gestaltet, damit alle das Objekt 1 durchdringenden Strahlen detektiert werden.

Weiterhin enthält die Anlage eine Auswerteeinheit mit einem Rechner 5 und einem Bildschirm 6. Der Rechner erzeugt aus dem von der Detektoranordnung 3 detektierten Intensitäten der Röntgenstrahlen ein Bild, das auf dem Bildschirm 6 angezeigt wird.

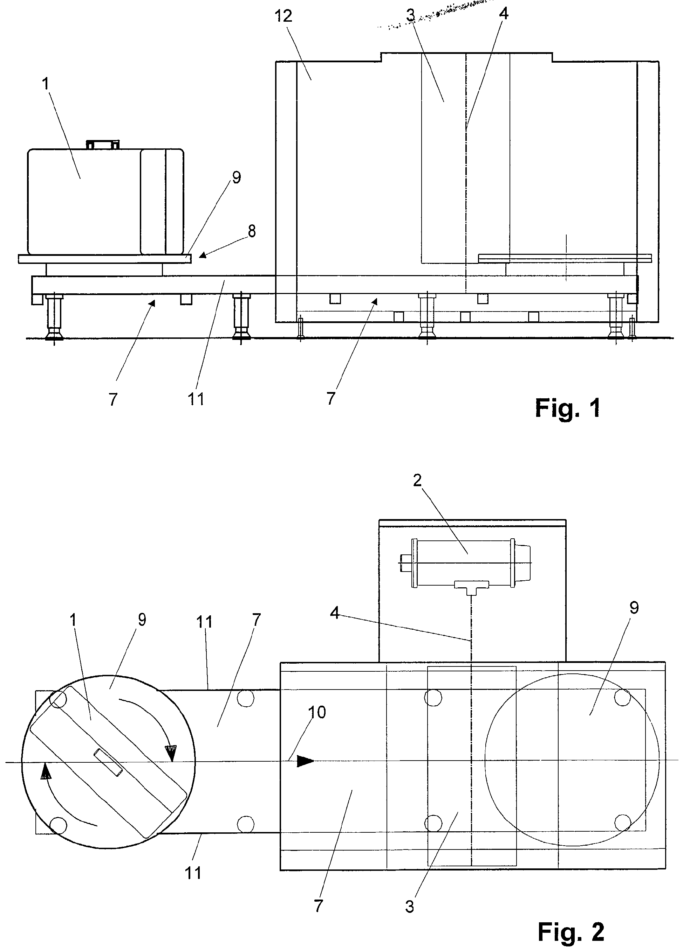

Um die zu prüfenden Objekte 1 durch die Strahlen - im Beispiel durch die Strahlenebene 4 - zu transportieren, enthält die Inspektionsanlage eine geradlinig fördernde Transporteinrichtung 7. Wesentlich für die Erfindung ist, daß die Transporteinrichtung 7 eine Dreheinrichtung 8 aufweist, die es ermöglicht, das Objekt 1 nach einem Durchlauf durch die Strahlen (Strahlenebene 4) zur Veränderung seiner Transportposition zu drehen, damit ein weiteres Bild mit geänderter Transportposition des Objekts 1 erzeugt werden kann. Bevorzugt enthält die Transporteinrichtung 8 eine Transportplatte 9, die mittels eines Drehantriebs um eine Drehachse senkrecht zur Transportebene drehbar gelagert ist, wie in Figur 2 dargestellt ist. Alternativ oder zusätzlich ist die Transportplatte 9, mittels eines Kippantriebs um eine in Transportrichtung (Pfeil 10) oder quer zur Transportrichtung verlaufenden Kippachse kippbar gelagert. Bevorzugt ist die Transportplatte 9 mit ihrem Dreh- oder Kippantrieb in einer Linearführung mit zwei seitlichen Führungsschienen 11 gelagert, die auf den Boden abgestützt sich von einem Bereich vor dem strahlengeschützten Strahlentunnel 12 in diesen bis in den Bereich hinter der Strahlenebene 4 erstrecken. Bevorzugt ist die Transporteinrichtung 7 auf einen Transport in Gegenrichtung umschaltbar, damit das Objekt 1 mit jeweils wechselnder Transportrichtung durch die Strahlenebene 4 transportiert werden kann. Beim vorliegenden Ausführungsbeispiel wird bei jedem Durchlauf durch die Strahlenebene 4 ein Bild erzeugt, das auf dem Bildschirm 6 angezeigt wird.

Der Rechner 5 ist zugleich Teil einer Steuereinrichtung, mit der die Transporteinrichtung 7 und die Dreheinrichtung 8 gesteuert werden. Für eine manuelle Bedienung ist der Rechner 5 und somit die Steuereinrichtung mit einer Bedieneinheit, im Ausführungsbeispiel eine Tastatur 13, verbunden, mittels der eine Bedienungsperson die Anzahl der Durchläufe und den Betrag des Drehwinkels vorgeben kann. Damit die Bedienungsperson möglichst weitgehend bei der manuellen Steuerung der Inspektion unterstützt wird, sind Anzeigemittel vorhanden, mittels der die aktuellen Zustandswerte des Inspektionsvorgangs, insbesondere die Winkelposition des Objekts 1 und die Anzahl der durchgeführten Durchläufe durch die Strahlen angezeigt werden. Bevorzugt wird zur Anzeige der Bildschirm 6 der Auswerteeinheit verwendet. Die bei den einzelnen Durchläufen erzeugten Bilder eines Objektes 1 werden auf dem Bildschirm 6 nebeneinander oder zeitlich nacheinander dargestellt. Da beim Ausführungsbeispiel auch beim Transport in Gegenrichtung Bilder erzeugt werden, bearbeitet die Auswerteeinheit die einzelnen Bilder so auf, daß diese bei der Darstellung auf dem Bildschirm 6 alle die gleiche Richtung aufweisen. Dies erleichtert es der Bedienungsperson zu entscheiden, ob ein weiteres Bild des Objekts mit veränderter Transportposition gemacht wird und um welchen Drehwinkel das Objekt 1 gegebenenfalls gedreht wird.

In einer Ausbaustufe enthält die Inspektionsanlage eine Steuereinrichtung mit einem Rechner, der die Anzahl der Durchläufe und/oder den Betrag des Drehwinkels vor einem Durchlauf automatisch steuert. Bevorzugt werden dann von der Steuereinrichtung die Anzahl der Bilder und der jeweilige Drehwinkel des Objekts 1 so gewählt, daß die einzelnen Bilder nach Art eines Films aneinander gereiht werden können. Die Auswerteeinheit stellt dann die einzelnen Bilder eines Objekts 1 in ihrer zeitlichen Abfolge auf den Bildschirm 6 so dar, daß der Eindruck eines sich drehenden Objekts erzeugt wird.

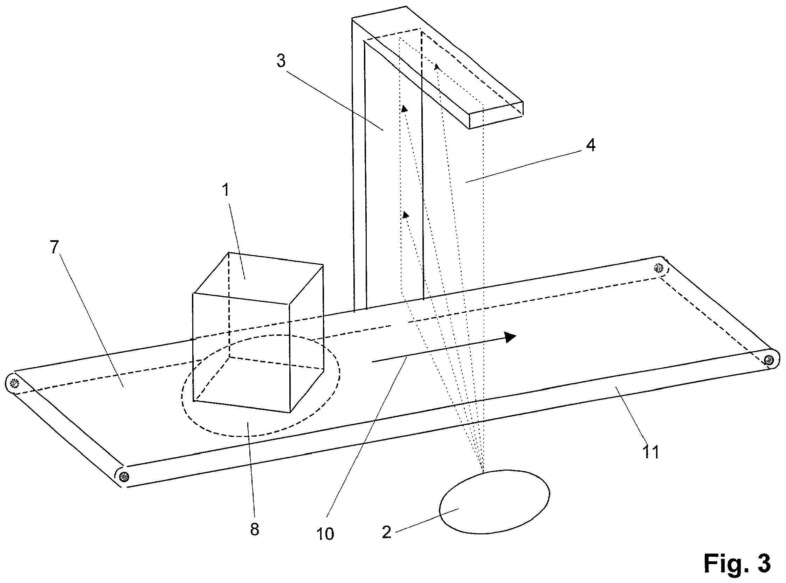

Der Ablauf der Inspektion eines Objekts 1 ist in den Figuren 3 bis 8 schematisch dargestellt:
Das Objekt 1 wird auf der Transportplatte 9 der Transporteinrichtung 7 plaziert, wobei sich die Transportplatte 9 vor dem Strahlentunnel 12 befindet (Figur 3). Anschließend wird das Objekt 1 geradlinig durch die Strahlen gefördert, wobei die Intensitäten der nicht absorbierten Strahlen von der Detektoranordnung 3 detektiert und in ein Bild des Objekts 1 verarbeitet werden. Bevorzugt werden von der Strahlenquelle 2 Röntgenstrahlen in einer Strahlenebene 4 abgegeben, und die Intensität der nicht absorbierten Strahlen werden von der Detektoranordnung 3 zeilenweise detektiert.

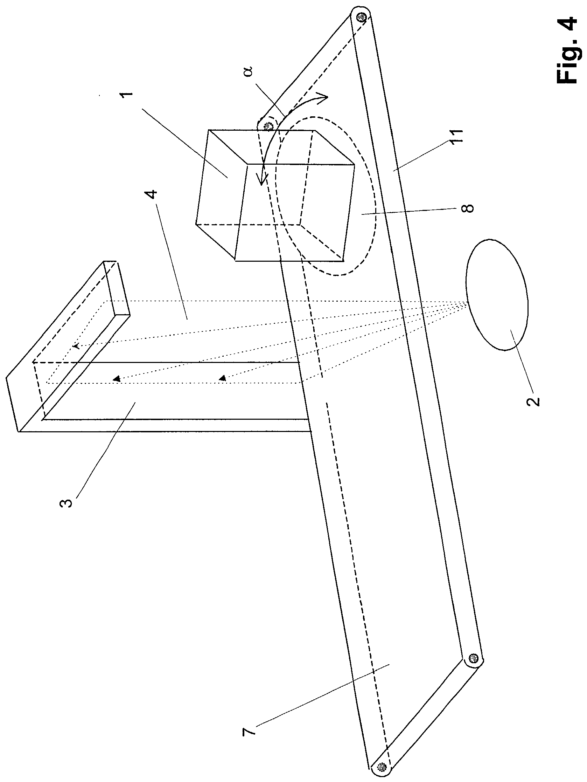

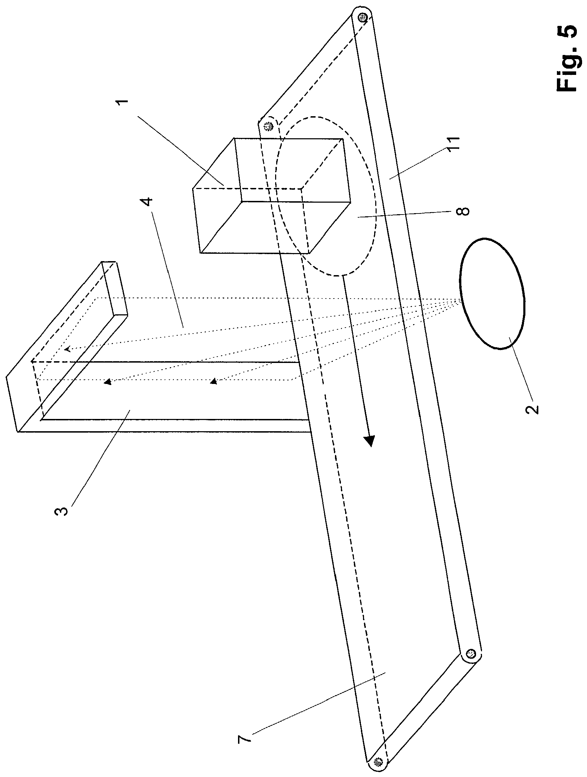

Falls das beim ersten Durchlauf erzeugte Bild Dunkelbereiche enthält, die zu überprüfen sind, wird das Objekt 1 hinter der Strahlenebene 4 um einen Winkel α in eine geänderte Transportposition gedreht (Figur 4, Figur 5). Im vorliegenden Ausführungsbeispiel erfolgt die Drehung des Objekts 1 um eine Achse senkrecht zur Transportebene. Eine Bedienungsperson entscheidet in Abhängigkeit von dem vorliegenden Bild, ob und in welcher Position das Objekt 1 erneut durch die Strahlen transportiert und geprüft wird. Der Betrag und/oder die Richtung des Winkels α, um den das Objekt 1 gedreht wird, wird dabei über die Tastatur 13 von der Bedienungsperson manuell eingegeben. Anschließend wird das Objekt 1 in Gegenrichtung erneut durch die Strahlenebene 4 transportiert und abgescannt. Das dabei erzeugte Bild wird auf den Bildschirm 6 neben dem ersten Bild angezeigt, so daß die Bedienungsperson die beiden Bilder vergleichen kann. Gleichzeitig zeigt der Bildschirm 6 die Winkelposition des Objekts und die Anzahl der durchgeführten Durchläufe durch die Strahlenebene 4 an.

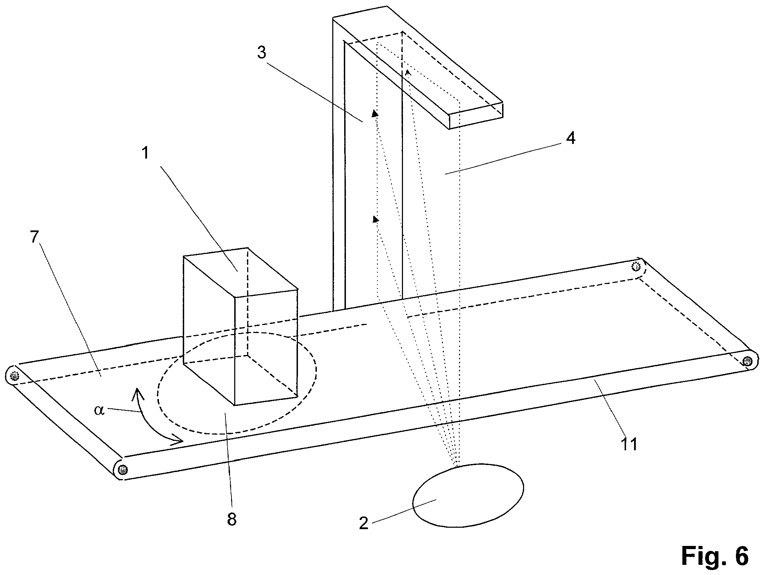

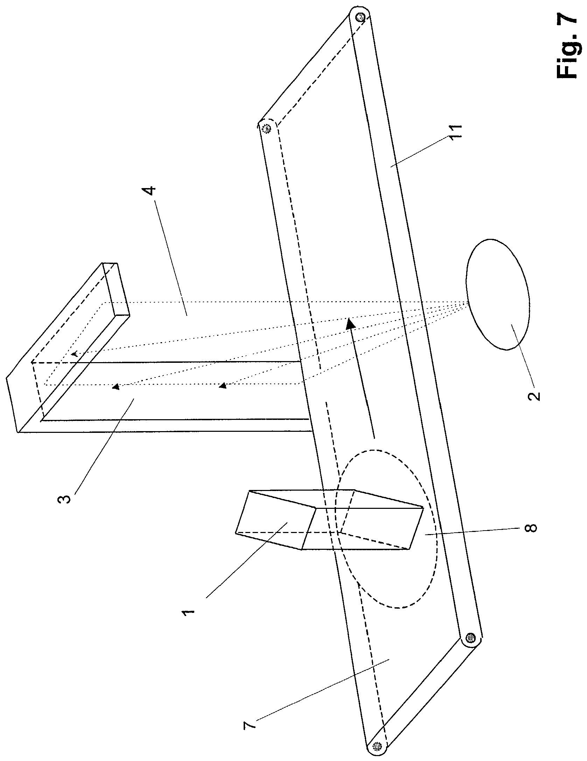

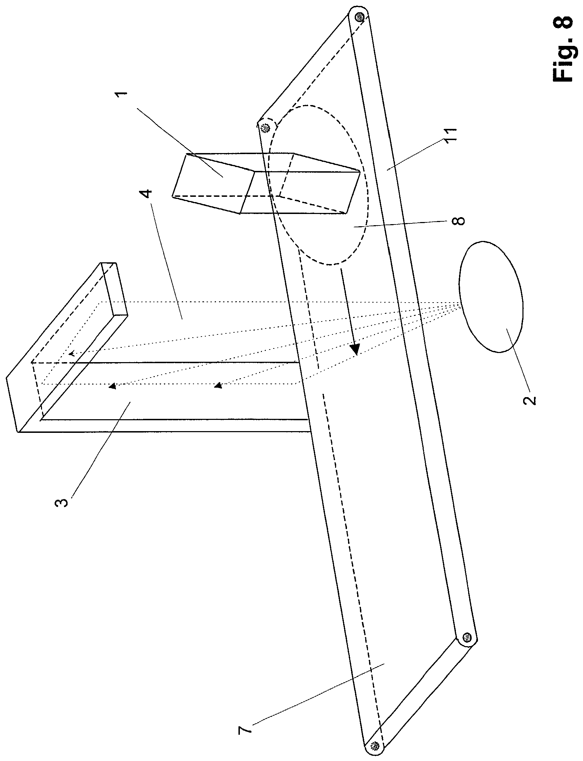

In Abhängigkeit von den erzeugten Bildern entscheidet die Bedienungsperson nach jedem Durchlauf, ob das Objekt 1 erneut um einen bestimmten Winkel gedreht und in dieser geänderten Transportposition erneut abgescannt wird (Figur 6, Figur 7). Diese Vorgehensweise wird so oft wiederholt, bis die in dem Objekt 1 enthaltenen Gegenstände hinsichtlich ihrer Sicherheitsrelevanz ausreichend identifiziert sind. Falls dies der Fall ist, wird das Objekt 1 aus der Anlage abtransportiert (Figur 8).

Falls der Inspektionsvorgang automatisch gesteuert wird, wird bei der Feststellung eines Dunkelbereichs eine automatisierte Inspektionsroutine ausgelöst. Dabei wird von dem Rechner 5 entweder eine vorbestimmte oder eine in Abhängigkeit von Parametern des Dunkelbereichs bestimmte Anzahl von Durchläufen ausgelöst. Bei dieser Verfahrensweise wird das Objekt 1 bevorzugt vor jedem Durchlauf durch die Strahlen um denselben Winkel gedreht, der ebenfalls entweder vorgegeben oder in Abhängigkeit von Parametern aus dem ersten Bild bestimmt wird. Der jeweilige Drehwinkel und die Anzahl der Durchläufe werden dabei so gewählt, daß sich die einzelnen Bilder eines Objekts 1 nach Art eines Films zeitlich nacheinander an dem Bildschirm 6 darstellen lassen. Dazu wird das Objekt 1 zumindest dreimal durch die Strahlen transportiert. Die zeitliche Abfolge der Darstellung der einzelnen Bilder eines Objektes 1 auf den Bildschirm 6 wird dabei so gewählt, daß der Eindruck eines sich drehenden Objektes 1 erzeugt wird. Diese Art der Darstellung erleichtert der das Bild prüfenden Bedienungsperson zu entscheiden, ob das Objekt 1 einer weiteren Prüfungsstufe zugeführt oder zusätzlich manuell überprüft wird.

Werden wie im beschriebenen Ausführungsbeispiels von einem Objekt 1 Bilder bei wechselnder Transportrichtung durch die Strahlen erzeugt, so bearbeitet die Auswerteeinheit die einzelnen Bilder so auf, daß diese bei der Darstellung auf den Bildschirm 6 alle die gleiche Richtung aufweisen. Alternativ ist es auch möglich, Bilder nur beim Transport in eine Richtung zu erzeugen. Dies vereinfacht bei einer zeilenweisen Detektion die Auswertung der Bilder, da sie alle in gleiche Richtung in Bezug auf die Strahlen erzeugt werden und so zeilenweise direkt aufgebaut und angezeigt werden können. Dazu wird entweder das Objekt 1 beim geradlinigen Rücktransport an der Strahlenquelle 2 vorbei nicht untersucht, oder das Objekt 1 wird auf einer außen um die Strahlenquelle 2 herumführenden Transportschleife für den nächsten Durchlauf zurück transportiert.

## Patentansprüche

1. Verfahren zur Inspektion eines Objektes (1), insbesondere eines Gepäckstückes, bei dem
- von einer ortsfesten Strahlenquelle (2) Strahlen abgegeben werden,
- das Objekt (1) geradlinig durch die Strahlen transportiert wird und
- dabei die Intensitäten der nicht absorbierten Strahlen von einer Detektoranordnung (3) detektiert und daraus ein Bild des Objekts (1) erzeugt wird,
**dadurch gekennzeichnet, dass** falls das nach dem ersten Durchlauf durch die Strahlen erzeugte Bild Dunkelbereiche enthält, die zu überprüfen sind, das Objekt (1) von einer Dreheinrichtung (8) zur Änderung seiner Transportposition um einen Winkel gedreht, anschließend erneut durch die Strahlen transportiert und mit derselben Strahlenquelle (2) ein weiteres Bild erzeugt wird.

2. Verfahren nach Anspruch 1, **dadurch gekennzeichnet, dass** von der Strahlenquelle (2) Strahlen in einer Strahlenebene (4) abgegeben werden und dass die Intensitäten der nicht absorbierten Strahlen von der Detektoranordnung (3) zeilenweise detektiert werden.

3. Verfahren nach Anspruch 1 oder 2, **dadurch gekennzeichnet, dass** das Objekt (1) mit jeweils wechselnder Transportrichtung durch die Strahlen transportiert wird, wobei bei Jedem Durchlauf durch die Strahlen ein Bild erzeugt wird.

4. Verfahren nach einem der Ansprüche 1 bis 3, **dadurch gekennzeichnet, dass** das Objekt (1) zumindest dreimal durch die Strahlen transportiert wird, wobei das Objekt (1) vor jedem Durchlauf in einem Winkel um dieselbe Drehachse gedreht wird.

5. Verfahren nach Anspruch 1 bis 4, **dadurch gekennzeichnet, dass** das Objekt (1) vor jedem Durchlauf durch die Strahlen um denselben Winkel gedreht wird.

6. Verfahren nach einem der Ansprüche 1 bis 5, **dadurch gekennzeichnet, dass** das Objekt (1) um eine Achse senkrecht zur Transportebene gedreht wird.

7. Verfahren nach einem der Ansprüche 1 bis 6, **dadurch gekennzeichnet, dass** die einzelnen Bilder eines Objekts (1) auf einem Bildschirm (6) nebeneinander oder zeitlich nacheinander dargestellt werden,

8. Verfahren nach einem der Ansprüche 1 bis 7, **dadurch gekennzeichnet, dass** eine Bedienungsperson vor einem Durchlauf den Betrag und/oder die Richtung des Winkels, um den das Objekt (1) gedreht wird, manuell eingibt

9. Verfahren nach einem der Ansprüche 3 bis 8, **dadurch gekennzeichnet, dass** der jewelllge Drehwinkel und die zeitliche Abfolge der Darstellung der einzelnen Bilder eines Objektes (1) auf den Bildschirm (6) so gewählt sind, dass der Eindruck eines sich drehenden Objektes (1) erzeugt wird.

10. Verfahren nach einem der Ansprüche 1 bis 9, dadurch gekennzelchnet, dass die Inspektion mittels Röntgenstrahlen durchgeführt wird.

11. Anlage zur Inspektion eines Objektes (1), insbesondere eines Gepäckstückes, mit
- einer ortsfesten Strahlenquelle (2),
- einer auf die Strahlenquelle (2) ausgerichteten Detektoranordnung (3),
- einer geradlinig fördernden Transporteinrichtung (7) zum Transportieren des Objektes (1) durch die Strahlen, sowie
- einer Auswerteeinheit mit einem Rechner (5), der aus den von der Detektoranordnung (3) detektlerten Intensitäten ein Bild erzeugt, und einem Bildschirm (6), der das erzeugte Bild anzeigt,
**dadurch gekennzeichnet, dass** die Transporteinrichtung (7) eine Dreheinrichtung (8) enthält, um das Objekt (1) nach einem Durchlauf durch die Strahlen zur Veränderung seiner Transportposition zu drehen, und dass Mittel vorhanden sind, ein weiteres Bild mit geänderter Transportposition des Objektes (1) mit derselben Strahlenquelle (2) zu erzeugen.

12. Anlage nach Anspruch 11, **dadurch gekennzeichnet, dass** die Strahlenquelle (2) Strahlen in einer fächerförmigen Strahlenebene (4) abgibt und die Detektoranordnung (3) Detek-toren in einer zeilenförmigen Anordnung enthält.

13. Anlage nach Anspruch 11 oder 12, **dadurch gekennzeichnet, dass** die Transporteinrichtung (7) auf einen Transport in Gegenrichtung umschaltbar ist.

14. Anlage nach einem der Ansprüche 11 bis 13, **dadurch gekennzeichnet, dass** sie als Röntgeninspektionsanlage mit einer Röntgenstrahlen abgebenden Strahlenquelle (2) ausgebildet Ist.

15. Anlage nach einem der Ansprüche 11 bis 14, **dadurch gekennzeichnet, dass** die Dreheinrichtung (8) eine Transportplatte (9) enthält, die mittels eines Drehantriebs um eine Drehachse senkrecht zur Transportebene drehbar gelagert ist.

16. Anlage nach einem der Ansprüche 11 bis 15, **dadurch gekennzeichnet, dass** die Transporteinrichtung eine Transportplatte (9) enthält, die mittels eines Kippantriebs um eine in Transportrichtung oder quer zur Transportrichtung verlaufenden Kippachse kippbar gelagert ist.

17. Anlage nach Anspruch 15 oder 16, **dadurch gekennzeichnet, dass** die Transportplatte mit Ihrem Dreh- oder Kippantrieb in einer Linearführung (11) gelagert ist.

18. Anlage nach einem der Ansprüche 11 bis 17, **gekennzeichnet durch** eine mit einer Steuereinrichtung verbundenen Bedieneinheit (13) mittels der eine Bedienungsperson die Anzahl der Durchläufe und/oder den Betrag des Drehwinkels vorgeben kann.

19. Anlage nach einem der Ansprüche 11 bis 17, **gekennzeichnet durch** eine Steuereinrichtung mit einem Rechner (5), der die Anzahl der Durchläufe und/oder den Betrag des Drehwinkels vor einem Durchlauf automatisch steuert.

20. Anlage nach einem der Ansprüche 11 bis 19, **gekennzeichnet durch** einen Bildschirm (6), auf dem die einzelnen Bilder eines Objekts (1) nebeneinander oder zeitlich nacheinander dargestellt werden.

21. Anlage nach Anspruch 20, **dadurch gekennzeichnet, dass** die Auswerteeinheit die einzeinen Bilder so aufbearbeitet, dass diese bei der Darstellung auf dem Bildschirm (6) alle die gleiche Richtung aufweisen.

22. Anlage nach Anspruch 20 oder 21, **dadurch gekennzeichnet, dass** von der Auswerteeinheit die einzelnen Bilder eines Objekts (1) ihrer zeitlichen Abfolge so dargestellt werden, dass der Eindruck eines sich drehenden Objekts (1) erzeugt wird.

23. Anlage nach einem der Ansprüche 11 bis 22, **gekennzeichnet durch** Anzeigemittel, Insbesondere dem Bildschirm (6) der Auswerteeinheit, mittels der einer Bedienungsperson aktuelle Zustandswerte des Inspektionsvorgangs, Insbesondere die Winkelposition des Objekts (1) und die Anzahl der durchgeführten Durchläufe durch die Strahlen, angezeigt werden.

## Claims

1. Method for inspecting an object (1), in particular an item of luggage, wherein
- rays are emitted by a stationary ray source (2),
- the object (1) is transported rectilinearly through the rays, and
- in the process the intensities of the non-absorbed rays are detected by a detector arrangement (3) and an image of the object (1) is generated therefrom,
**characterized in that** if the image generated after the first pass through the rays contains dark regions to be checked, the object (1) is rotated by an angle by a rotation device (8) in order to change its transport position and subsequently is transported once again through the rays and a further image is generated with the same ray source (2) .

2. Method according to Claim 1, **characterized in that** the ray source (2) emits rays in a ray plane (4), and **in that** the intensities of the non-absorbed rays are detected line by line by the detector arrangement (3).

3. Method according to Claim 1 or 2, **characterized in that** the object (1) is transported through the rays with a respectively changing transport direction, wherein an image is generated upon each pass through the rays.

4. Method according to any of Claims 1 to 3, **characterized in that** the object (1) is transported through the rays at least three times, wherein the object (1) is rotated at an angle about the same rotation axis before each pass.

5. Method according to Claims 1 to 4, **characterized in that** the object (1) is rotated by the same angle before each pass through the rays.

6. Method according to any of Claims 1 to 5, **characterized in that** the object (1) is rotated about an axis perpendicular to the transport plane.

7. Method according to any of Claims 1 to 6, **characterized in that** the individual images of an object (1) are represented on a screen (6) alongside one another or temporally successively.

8. Method according to any of Claims 1 to 7, **characterized in that** before a pass an operator manually inputs the magnitude and/or the direction of the angle by which the object (1) is rotated.

9. Method according to any of Claims 3 to 8, **characterized in that** the respective rotation angle and the temporal sequence of the representation of the individual images of an object (1) on the screen (6) are chosen such that the impression of a rotating object (1) is generated.

10. Method according to any of Claims 1 to 9, **characterized in that** the inspection is carried out by means of X-rays.

11. Installation for inspecting an object (1), in particular an item of luggage, comprising
- a stationary ray source (2),
- a detector arrangement (3) aligned with the ray source (2),
- a rectilinearly conveying transport device (7) for transporting the object (1) through the rays, and
- an evaluation unit comprising a computer (5), which generates an image from the intensities detected by the detector arrangement (3), and a screen (6), which displays the generated image,
**characterized in that** the transport device (7) contains a rotation device (8) in order to rotate the object (1) after a pass through the rays in order to alter the transport position of said object, and **in that** means are present for generating a further image with a changed transport position of the object (1) using the same ray source (2).

12. Installation according to Claim 11, **characterized in that** the ray source (2) emits rays in a fan-shaped ray plane (4) and the detector arrangement (3) contains detectors in a linear arrangement.

13. Installation according to Claim 11 or 12, **characterized in that** the transport device (7) is switchable to transport in the opposite direction.

14. Installation according to any of Claims 11 to 13, **characterized in that** it is embodied as an X-ray inspection installation comprising a ray source (2) that emits X-rays.

15. Installation according to any of Claims 11 to 14, **characterized in that** the rotation device (8) contains a transport plate (9), which is mounted rotatably by means of a rotary drive about a rotation axis perpendicular to the transport plane.

16. Installation according to any of Claims 11 to 15, **characterized in that** the transport device contains a transport plate (9), which is mounted tiltably by means of a tilt drive about a tilt axis extending in the transport direction or transversely with respect to the transport direction.

17. Installation according to Claim 15 or 16, **characterized in that** the transport plate is mounted with its rotary or tilt drive in a linear guide (11).

18. Installation according to any of Claims 11 to 17, **characterized by** an operating unit (13) connected to a control device, by means of which operating unit an operator can predefine the number of passes and/or the magnitude of the rotation angle.

19. Installation according to any of Claims 11 to 17, **characterized by** a control device comprising a computer (5), which automatically controls the number of passes and/or the magnitude of the rotation angle before a pass.

20. Installation according to any of Claims 11 to 19, **characterized by** a screen (6), on which the individual images of an object (1) are represented alongside one another or temporally successively.

21. Installation according to Claim 20, **characterized in that** the evaluation unit conditions the individual images such that they all have the same direction during the representation on the screen (6).

22. Installation according to Claim 20 or 21, **characterized in that** the evaluation unit represents the individual images of an object (1) in their temporal sequence such that the impression of a rotating object (1) is generated.

23. Installation according to any of Claims 11 to 22, **characterized by** display means, in particular the screen (6) of the evaluation unit, by means of which current state values of the inspection process, in particular the angular position of the object (1) and the number of passes through the rays that have been carried out, are displayed for an operator.

## Revendications

1. Procédé, destiné à inspecter un objet (1), notamment un bagage, lors duquel,
- des rayons sont restitués par une source de rayonnement (2) stationnaire,
- l'objet (1) est transporté en ligne droite à travers les rayons et
- à cet effet, les intensités des rayons non absorbés sont détectées par un agencement de détecteurs (3) et une image de l'objet (1) en est créée,
**caractérisé en ce que** si l'image créée après le premier passage à travers les rayons contient des zones d'ombre qui doivent être vérifiées, l'objet (1) est tourné par un système de rotation (8) pour modifier sa position de transport autour d'un angle, puis transporté une fois encore à travers les rayons et une image supplémentaire est créée avec la même source de rayonnement (2).

2. Procédé selon la revendication 1, **caractérisé en ce que** par la source de rayonnement (2), des rayons sont restitués dans un plan de rayonnement (4) et **en ce que** les intensités des rayons non absorbés sont détectées ligne par ligne par l'agencement de détecteurs (3).

3. Procédé selon la revendication 1 ou 2, **caractérisé en ce que** l'objet (1) est transporté à travers les rayons avec une direction de transport respectivement changeante, une image étant créée à chaque passage à travers les rayons.

4. Procédé selon l'une quelconque des revendications 1 à 3, **caractérisé en ce que** l'objet (1) est transporté au moins trois fois à travers les rayons, avant chaque passage, l'objet (1) étant tourné sous un angle autour du même axe de rotation.

5. Procédé selon la revendication 1 à 4, **caractérisé en ce qu'**avant chaque passage, l'objet (1) est tourné autour du même angle à travers les rayons.

6. Procédé selon l'une quelconque des revendications 1 à 5, **caractérisé en ce que** l'objet (1) est tourné autour d'un axe à la perpendiculaire du plan de transport.

7. Procédé selon l'une quelconque des revendications 1 à 6, **caractérisé en ce que** des images individuelles d'un objet (1) sont représentées côte à côte ou successivement dans le temps sur un écran (6).

8. Procédé selon l'une quelconque des revendications 1 à 7, **caractérisé en ce qu'**avant un passage, un opérateur saisit manuellement la valeur et/ou la direction de l'angle autour duquel l'objet (1) est tourné.

9. Procédé selon l'une quelconque des revendications 3 à 8, **caractérisé en ce que** l'angle de rotation respectif et la séquence temporelle de la représentation des images individuelles d'un objet (1) sur l'écran (6) sont sélectionnés de sorte à créer l'impression d'un objet (1) en rotation.

10. Procédé selon l'une quelconque des revendications 1 à 9, **caractérisé en ce que** l'inspection est réalisée au moyen de rayons X.

11. Installation, destinée à inspecter un objet (1), notamment un bagage, comprenant
- une source de rayonnement (2) stationnaire,
- un agencement de détecteurs (3) orienté sur la source de rayonnement (2),
- un système de transport (7) convoyant en ligne droite, destiné à transporter l'objet (1) à travers les rayons, ainsi
- qu'une unité d'évaluation dotée d'un ordinateur (5), qui à partir des intensités détectées par l'agencement de détecteurs (3) créé une image et d'un écran (6), qui affiche l'image créée,
**caractérisée en ce que** le système de transport (7) contient un système de rotation (B), pour faire tourner l'objet (1) après un passage à travers les rayons, pour modifier sa position de transport et **en ce que** des moyens sont présents pour créer une image supplémentaire avec une position de transport modifiée de l'objet (1) avec la même source de rayonnement (2).

12. Installation selon la revendication 11, **caractérisée en ce que** la source de rayonnement (2) délivre des rayons dans un plan de rayonnement (4) en forme d'éventail et l'agencement de détecteurs (3) contient des détecteurs agencés en lignes.

13. Installation selon la revendication 11 ou 12, **caractérisée en ce que** le système de transport (7) est inversable sur un transport en sens opposé.

14. Installation selon l'une quelconque des revendications 11 à 13, **caractérisée en ce qu'**elle est conçue sous la forme d'une installation à rayons X, avec une source de rayonnement (2) restituant des rayons X.

15. Installation selon l'une quelconque des revendications 11 à 14, **caractérisée en ce que** le système de rotation (8) contient un plateau de transport (9), qui au moyen d'un entraînement en rotation est logé autour d'un axe de rotation à la perpendiculaire du plan de transport.

16. Installation selon l'une quelconque des revendications 11 à 15, **caractérisée en ce que** le système de transport contient un plateau de transport (9), qui au moyen d'un entraînement en basculement, est logé en étant susceptible de basculer autour d'un axe de basculement s'écoulant dans la direction de transport ou à la transversale de la direction de transport.

17. Installation selon la revendication 15 ou 16, **caractérisée en ce que** le plateau de transport est logé avec son entraînement en rotation ou en basculement dans un guidage linéaire (11).

18. Installation selon l'une quelconque des revendications 11 à 17, **caractérisée par** une unité de manoeuvre (13) reliée avec un système de commande, au moyen de laquelle un opérateur peut prédéfinir le nombre de passages et/ou la valeur de l'angle de rotation.

19. Installation selon l'une quelconque des revendications 11 à 17, **caractérisée par** un système de commande doté d'un ordinateur (5), qui avant un passage, commande automatiquement le nombre de passages et/ou la valeur de l'angle de rotation.

20. Installation selon l'une quelconque des revendications 11 à 19, **caractérisée par** un écran (6), sur lequel les images individuelles d'un objet (1) sont représentées côte à côte ou successivement dans le temps.

21. Installation selon la revendication 20, **caractérisée en ce que** l'unité d'évaluation traite les images individuelles de telle sorte que lors de leur représentation sur l'écran (6), elles présentent toutes la même direction.

22. Installation selon la revendication 20 ou 21, **caractérisée en ce que** par l'unité d'évaluation, les images individuelles d'un objet (1) sont représentées dans leur séquence temporelle de sorte à donner l'impression d'un objet (1) en rotation.

23. Installation selon l'une quelconque des revendications 11 à 22, **caractérisée par** des moyens d'affichage, notamment l'écran (6) de l'unité d'évaluation, au moyen desquels des valeurs d'état actuel du processus d'inspection, notamment la position angulaire de l'objet (1) et le nombre des passages effectués par les rayons sont affichés à l'attention d'un opérateur.
